# EUROPÄISCHE PATENTSCHRIFT

(11) **EP 0 713 015 B1**
(45) Veröffentlichungstag und Bekanntmachung des Hinweises auf die Patenterteilung: **08.08.2001**
(21) Anmeldenummer: 95116474.8
(22) Anmeldetag: 19.10.1995
(51) Int. Cl.: F16B 13/14

(54) **Selbsttragende Dübelmasse für die chemische Befestigungstechnik**
Self-supporting mastic for dowels used in the chemical fastening technology
Matière autoportative pour cheville pour la technique de fixation chimique

(30) Priorität: 28.10.1994 DE 4438577
(43) Veröffentlichungstag der Anmeldung: 22.05.1996
(73) Patentinhaber: DSM RESINS B.V., 8022 AW Zwolle (NL); HILTI Aktiengesellschaft, 9494 Schaan (LI)
(72) Erfinder: Moench, Monika, D-86899 Landsberg (DE); Mauthe, Peter, D-86842 Tuerkheim (DE); Ziegert, Fritz, D-67245 Lambsheim (DE); Schwiegk, Stefan, Dr., D-67433 Neustadt (DE)
(74) Vertreter: den Hartog, Jeroen Hendrikus Joseph

(56) Entgegenhaltungen:
- EP-A- 0 650 942
- DE-A- 3 617 702
- DE-C- 4 121 832

## Beschreibung

Die Erfindung betrifft eine Dübelmasse für die chemische Befestigungstechnik auf der Basis eines radikalisch polymerisierbaren Reaktionharzes.

Die Verwendung von Reaktionsharzmassen auf der Basis von ungesättigten Polyesterharzen, Vinylesterharzen oder Vinylesterurethanharzen als Bindemittel für die chemische Befestigungstechnik ist seit langem bekannt. Es handelt sich dabei um Zweikomponentensysteme, wobei eine Komponente das Reaktionsharz und die andere Komponente den Radikalinitiator enthält. Andere übliche Bestandteile wie Füllmittel, Beschleuniger, Stabilisatoren, Lösungsmittel einschließlich Reaktivlösungsmittel (Comonomere) können in der einen und/oder der anderen Komponente enthalten sein. Durch Vermischen der beiden Komponenten wird dann die Reaktion unter Bildung eines gehärteten Produktes in Gang gebracht.

Zur Befestigung von Ankerstangen in Bohrlöchern von Beton oder massivem Gestein werden im allgemeinen Glaspatronen mit 2 Kammern zur Trennung der in der Patrone enthaltenen Komponenten verwendet (siehe z.B. EP-A 199 671). Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker bewährt.

Bei Verankerungen in Beton und insbesondere in porösem oder Hohlräume enthaltendem Untergrund, z.B. in Hohlblocksteinen, Schaumblocksteinen oder Lehmziegelsteinen, kann man mit Zweikammer-Kartuschen arbeiten (siehe z.B. DE-A 36 17 702). Die beiden Komponenten der Dübelmasse werden gleichzeitig aus der Kartusche herausgedrückt, durch geeignete Vorrichtungen, z.B. Schnecken oder Statikmischer, vermischt und in das Bohrloch gedrückt. In dieses kann dann direkt ein verankerbares Befestigungselement mit beliebig geformtem Querschnitt eingeführt werden, welches nach dem Aushärten des Harzes im Bohrloch fixiert ist; oder man führt in das Bohrloch erst einen Dübel oder eine Innengewindehülse ein, die durch Aushärten des Harzes fixiert werden und in die dann Schrauben bzw. Ankerstangen eingedreht werden können.

Zweikammer-Glaspatronen haben den Nachteil, daß sie auf umständliche und teure Art hergestellt werden müssen und zerbrechlich sind.

Zweikammer-Kartuschen haben ebenfalls einen komplizierten Aufbau, außerdem erfordern sie ein zusätzliches Misch- und Auspreßaggregat. Aufgrund der begrenzten Topfzeit müssen die vorgemischten Komponenten schnell hintereinander in Bohrlöcher eingepreßt werden; Abfall läßt sich praktisch kaum vermeiden.

Der Erfindung lag also die Aufgabe zugrunde, eine schnellhärtende Dübelmasse für die chemische Befestigungstechnik zu entwickeln, die einfach herzustellen, leicht handhabbar und problemlos applizierbar ist, ohne daß dabei eine aufwendige Verpackung oder spezielle Applikationsgeräte notwendig sind.

Es wurde gefunden, daß diese Aufgabe gelöst wird, wenn die Dübelmasse als selbsttragende und lagerstabile Masse vorliegt, die in dieser Form direkt in das Bohrloch eingesetzt werden kann.

Gegenstand der Erfindung ist demzufolge eine Dübelmasse für die chemische Befestigungstechnik, enthaltend
A. ein radikalisch polymerisierbares Reaktionsharz,
B. gegebenenfalls ein Comonomer in einer Menge von bis zu 200 Gew.-%, bezogen auf A,
C. einen Radikalinitiator in einer Menge von 0,5 bis 15 Gew.-%, bezogen auf A,
D. einen Polymerisationsbeschleuniger in einer Menge von 0,1 bis 4 Gew.-%, bezogen auf A,
E. ein Eindickmittel für das Reaktionsharz in einer Menge von 0,1 bis 10 Gew.-% bei solcher Verwendung von Oxiden oder Hydroxiden des Magnesiums, Calciums, Lidhiums oder Aluminiums oder von Kieselsäuren oder Bentone, bzw. von 10 bis 100 Gew.-% bei solcher Verwendung von kristallinen Reaktionsharzen mit einem Schmelzpunkt oberhalb von 50°C, jeweils bezogen auf A,
F. grobe oder feinteilige Füllstoffe in einer Menge von bis zu 100 Gew.-%, bezogen auf A.

Sie ist dadurch gekennzeichnet, daß sie als selbsttragende lagerstabile Masse vorliegt, die in dieser Form direkt in das Bohrloch eingesetzt werden kann, und daß der Radikalinitiator C in der Matrix der anderen Bestandteile, als separate Phase von dieser Matrix abgetrennt, eingelagert ist.

Selbsttragend bedeutet in diesem Zusammenhang, daß die Dübelmasse ohne Verpackung, z.B. in Form einer stabilen Hülle, bei Raumtemperatur oder leicht erhöhter Temperatur handhabbar ist. Lagerstabil bedeutet, daß die Dübelmasse längere Zeit, vorzugsweise länger als 6, insbesondere länger als 12 Monate gelagert werden kann, ohne zu polymerisieren. Die Dübelmasse hat vorzugsweise eine feste, formstabile Konsistenz und weist eine trockene Oberfläche auf.

In der EP-A 199 671 sind Haftmittel auf Acrylatharzbasis und deren Verwendung zu Verankerungen beschrieben. Die Haftmittel enthalten zwei wesentliche Bestandteile, nämlich Reaktionsharz und Härter, welcher auch mikroverkapselt sein kann. Diese Bestandteile können getrennt oder unmittelbar nach dem Mischen gemeinsam in das Bohrloch eingebracht werden. Selbsttragende, lagerstabile Dübelmassen sind aber nicht beschrieben, die Schrift gibt auch keine Anregung zur Lösung der oben beschriebenen Aufgabe.

In der DE-A 32 03 596 ist eine knetbare Masse zur Verankerung von Ankerbolzen beschrieben. Die Masse besteht aus einem Epoxidharz einerseits und einem mikroverkapselten Aminhärter andererseits. Epoxidharze und Aminhärter sind aber für handwerkliche Anwendungen wegen ihrer hautreizenden Wirkung ungeeignet, außerdem dauert die Aushärtung der Massen im allgemeinen viele Stunden bis mehrere Tage, so daß erheblicher Zeitverlust bei der Befestigung von Ankerbolzen auftritt. Schließlich muß durch starke Scherung eine verhältnismäßig hohe Temperatur erzeugt werden, welche zur Härtung der meisten Epoxidharzsysteme notwendig ist.

In der GB-A 2 028 451 ist eine Patrone zur Verankerung von Bolzen beschrieben, in der entweder beide Komponenten in Makrokapseln enthalten sind oder nur eine Komponente makroverkapselt und die andere in flüssiger Form in der Patrone enthalten ist. Als spezielle Ausführungsform ist eine selbsttragende Dübelmasse beschrieben, in der beide Komponenten makroverkapselt sind. Die Verkapselung der volumenmäßig weit überwiegenden Harzkomponente ist aber sehr aufwendig.

Zu den einzelnen Komponenten der erfindungsgemäßen Dübelmasse ist folgendes zu sagen:
A. Als radikalisch polymerisierbare Reaktionsharze kommen in Frage:
   1. ungesättigte Polyester (UP)
   2. Vinylesterharze (VE)
   3. Vinylesterurethanharze (VU)

   1. Ungesättigte Polyester sind die üblichen Kondensationsprodukte aus Dicarbonsäuren oder deren veresterbaren Derivaten, insbesondere deren Anhydriden, die mit mehrwertigen, insbesondere zweiwertigen Alkoholen esterartig verknüpft sind, und gegebenenfalls zusätzlich Reste einwertiger Carbonsäuren oder einwertiger Alkohole enthalten, wobei zumindest ein Teil der Einsatzstoffe über ungesättigte, copolymerisationsfähige Gruppen verfügen muß.
   2a. Unter VE-Harzen, die auch Epoxy(meth)acrylate genannt werden, versteht man gemeinhin Additionsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. VE-Harze aus Epoxy-Novolakharzen und (Meth)-Acrylsäure, wie sie beispielsweise in der US-PS 3 256 226 beschrieben werden, weisen dagegen höhere Wärmeformbeständigkeiten, aber geringere Zähigkeiten auf.
      Kennzeichnend für die Klasse der VE-Harze ist die Gruppe 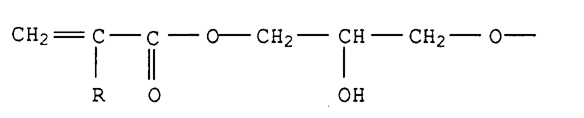 mit R=H oder CH₃.
   2b. Eine andere Klasse von VE-Harzen sind Veresterungsprodukte von gegebenenfalls alkoxyliertem Bisphenol A mit (Meth)acrylsäure, z.B. nach EP-A 534 201.
   3. VU-Harze, die auch Urethan(meth)acrylate genannt werden, sind, z.B. aus US-A 3 297 745, US-A 3 772 404, US-A 4 618 658, GB-A 2 217 722 und DE-A 37 44 390 bekannt. Sie weisen im allgemeinen folgende Gruppen auf:
      a) 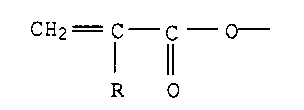 (mit R = H oder CH₃)
      b) 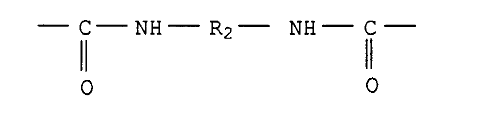 (mit R₂ = zweiwertiger aliphatischer, aromatischer oder cycloaliphatischer Rest mit 4 bis 40 C-Atomen, vorzugsweise ein aromatischer Rest mit 6 bis 20 C-Atomen),
      c) -O-R₃-O-
         (mit R₃ = zweiwertiger aliphatischer, cycloaliphatischer oder aromatischer Rest mit 2 bis 500 C-Atomen, vorzugsweise ein aliphatischer Rest mit 4 bis 100 C-Atomen),
      sowie gegebenenfalls
      d) -NH-R₄-NH-
      (mit R₄ = aliphatischer, cycloaliphatischer oder aromatischer Rest mit 2 bis 100 C-Atomen).
      Vorzugsweise ist das VU-Harz ein Umsetzungsprodukt aus
      - einem polyfunktionellen Isocyanat,
      - gegebenenfalls einem mehrwertigen Alkohol,
      - gegebenenfalls einem mehrwertigen Amin,
      - einem Hydroxyalkyl-(meth)acrylat,
      wobei bei der Umsetzung das Gewichtsverhältnis Isocyanat zu (Alkohol + Amin) zwischen 100:10 und 100:300 betragen kann und das Äquivalentverhältnis Hydroxyalkyl(meth)acrylat zu den freien Isocyanatgruppen des Umsetzungsproduktes zwischen 3:1 und 1:2 liegt. Durch Abmischungen der Harze untereinander kann der Erweichungsbereich der Komponente A gezielt eingestellt werden.
B. Hier kommen die üblichen, bei Reaktionsharzen angewandten Comonomeren in Frage, vorzugsweise in Mengen von bis zu 200 Gew.-%, bezogen auf A. Der Gehalt an Comonomer richtet sich nach der gewünschten Viskosität des Harzes (bei einzudickenden Reaktionsharzen A) bzw. nach der Kristallisationstendenz beim Einsatz kristalliner Reaktionsharze A. Grundsätzlich sind auch comonomerenfreie Dübelmassen möglich. Bevorzugte Comonomere B sind (Meth-)Acrylsäureester, beispielsweise Butandioldimethacrylat, Ethylenglykoldimethacrylat, Acetacetoxyethylmethacrylat oder (gegebenenfalls ethoxyliertes) Bisphenol-A-Dimethacrylat; ferner cycloaliphatische Verbindungen, die ethylenisch ungesättigte Substituenten aufweisen, nach DE-A 39 40 138; Styrol und substituierte Styrole, wie tert.-Butylstyrol und Vinyltoluol; sowie deren Mischungen.
   Ein konventionelles Comonomeres, vor allem bei UP-Harzen, ist Styrol. In Anwendungsfällen, bei denen der Styrolgeruch stört, können VE- oder VU-Harze in Kombination mit Butandioldimethacrylat oder tert. Butylstyrol, gegebenenfalls zusammen mit einem hochsiedenden (Siedepunkt höher als 120°C) Methacrylsäureester verwendet werden.
C. Vorzugsweise ist der Radikalinitiator C als separate Phase in der kohärenten Matrix der anderen Bestandteile eingelagert, und er ist von dieser Matrix, d.h. von Reaktionsharz A, Comonomer B und Beschleuniger D räumlich soweit abgetrennt, daß keine vorzeitige Polymerisation eintreten kann. Bevorzugte Initiatoren sind organische Peroxide, die, wenn sie zusammen mit Beschleunigern angewandt werden, bei Raumtemperatur in Radikale zerfallen und die Polymerisation auslösen können. Besonders gut geeignet sind Dibenzoylperoxid, 2,4,2',4'-Tetrachlorbenzoylperoxid, 2,2'-Dimethylbenzoylperoxid und Methylethylketonperoxid, ferner tert.-Butylperbenzoat, Cyclohexanonperoxid, Laurylperoxid und Cumolhydroperoxid, sowie tert.-Butylperoxy-2-ethylhexanoat. Die Peroxide werden vorzugsweise in Mengen von 0,5 bis 15 Gew.-%, vorzugsweise von 1 bis 8 Gew.-%, bezogen auf A, eingesetzt.
   Der Initiator ist im allgemeinen in einem Phlegmatisierungsmittel, z.B. Phthalate, Adipate, Siliconöl oder Wasser, gelöst oder dispergiert oder auf einen Träger, z.B. Gips aufgezogen.
   Die räumliche Trennung des Initiators vom Harz erfolgt vorzugsweise durch Verkapselung, indem er beispielsweise (als Makrokapsel) mit einem Durchmesser von 2 bis 20 mm in Glasampullen eingeschweißt oder (als Mikrokapsel mit einem Durchmesser von 0,05 bis 1 mm) z.B. mit Gelatine oder Cellulose ummantelt wird. Die Kapseln sind vorzugsweise gleichmäßig in der Matrix der Dübelmasse verteilt.
   Bei einer anderen bevorzugten Ausführungsform wird der Initiator ohne Verkapselung in einem gesonderten Hohlraum, z.B. in einem koaxialen Kern- oder Randabschnitt der zylinderförmigen Dübelmasse angeordnet. In diesem Fall bildet sich an der Phasengrenze eine dünne gehärtete Schicht aus, welche als räumliche Abtrennung wirkt. Man kann den Initiator auch in Folie umhüllt in den Hohlraum einbringen.
D. Als Polymerisationsbeschleuniger kommen - in Mengen von 0,1 bis 4 Gew.-%, bezogen auf A - tertiäre aromatische Amine, wie Dimethylanilin, Dimethyl-p-toluidin, Di-isopropanol-p-toluidin, Diethylanilin oder Diethanol-p-toluidin in Frage, oder redoxaktive Metallsalze, wie Cobaltstearat. Grundsätzlich kann statt des Initiators C auch der Beschleuniger D verkapselt sein.
Die räumliche Trennung von Initiator C und Beschleuniger D kann auch dadurch bewerkstelligt werden, daß diese Komponenten jeweils mit den restlichen Bestandteilen in zwei getrennten Lagen eingearbeitet sind, welche übereinandergelegt und zusammengerollt werden.
E. Bei UP als Reaktionsharz A werden vorzugsweise die üblichen Eindickmittel auf Basis von Oxiden oder Hydroxiden des Magnesiums, Calciums, Lithiums oder Aluminiums in Mengen von 0,1 bis 10 Gew.-%, bezogen auf A, eingesetzt, ggf. zusammen mit Eindickbeschleunigern, wie z.B. Cholinchlorid oder Halbestern aus Polyetherpolyol und Maleinsäureanhydrid. Insbesondere bei VE- und VU-Harzen, welche normalerweise keine Carboxylgruppen enthalten, muß das Harz vor der Zugabe von Eindickmitteln mit Eindickadditiven, wie carboxylgruppenhaltigen Vinylpolymeren (nach EP-A 501 176) oder Halbestern aus einem Polyetherpolyol und einem Dicarbonsäureanhydrid (nach DE-A 44 06 646) kombiniert werden.
   Weitere geeignete Eindickmittel sind hochdisperse Kieselsäuren oder Bentone, wie Montmorillionit, in Mengen von 0,1 bis 10 Gew.-%, bezogen auf A. Je nach Harztyp und Comonomer ist für die Wirksamkeit dieser Eindickmittel eine Oberflächenmodifizierung nötig, z.B. durch Hydrophobierung mit Silanen. Eine andere bevorzugte Klasse von Eindickmitteln sind die weiter unten beschriebenen kristallinen Reaktionsharze, die in Mengen von 10 bis 100 Gew.-% dem amorphen Reaktionsharz A zugesetzt werden. Voraussetzung für deren Eindickwirkung ist, daß amorphes und kristallines Reaktionsharz bei Temperaturen unterhalb von 50°C nicht verträglich sind, so daß beim Vermischen das amorphe Reaktionsharz als kohärente Phase und das kristalline Reaktionsharz als disperse Phase vorliegt. Geeignet sind auch kristalline Wachse, z.B. Stearate und Palmitate, ferner Reaktionskristallisatoren, z.B. auf Basis von Diisocyanaten und symmetrischen Aminen.
F. Zu unterscheiden ist zwischen groben und feinteiligen Füllstoffen. Grobe Füllstoffe, z.B. Quarzsand, Glassplitter, Korund oder Steingut mit einer Teilchengröße von 0,01 bis 5 mm, werden in Mengen von bis zu 1000 Gew.-%, bezogen auf A, eingesetzt.
   Als feinteilige, verstärkende Füllstoffe für die Bindemittelmatrix dienen z.B. Quarzmehl, Glasmehl, Schwerspat, Leichtspat, Talkum und Kreide. Die Füllstoffe können als Fasern, z.B. Mineral- oder Kunststoffasern eingesetzt werden, bevorzugt und deutlicher verstärkend wirken die globulären Füllstoffe.

Werden Comonomere mit einem hohen Dampfdruck verwendet, so ist es zweckmäßig, das Abdunsten des Comonomeren zu unterbinden. Hierfür ist eine Beschichtung mit einer Diffusionssperre zweckmäßig. Im wichtigen Fall eines styrolhaltigen Reaktionsharzes kann die Diffusion durch einen Film aus Polyvinylalkohol erheblich verzögert werden. Hierfür wird Polyvinylalkohol gelöst und der Dübel mit der Lösung überzogen. Die Schichtdicke (bevorzugt zwischen 0,1 und 100 µm) kann durch die Viskosität der Lösung eingestellt werden. Anschließend wird die Beschichtung getrocknet.

Die Verfestigung des Reaktionsharzes kann beispielsweise wie folgt bewerkstelligt werden:

Bei einer ersten Variante werden als Komponente A kristalline oder zumindest partiell kristalline Reaktionsharze eingesetzt. Kristalline UP sind solche auf Basis von symmetrischen, unverzweigten Dicarbonsäuren und Diolen, z.B. Fumarsäure, Terephthalsäure bzw. Adipinsäure einerseits und Ethylenglykol, 1,4-Butandiol und 1,6-Hexandiol andererseits. Sie können gegebenenfalls geringe Mengen unsymmetrischer Dicarbonsäuren bzw. Diole enthalten.

Kristalline VE-Harze werden durch Umsetzung linearer und symmetrischer Bisepoxide, bevorzugt auf Basis von Bisphenol A, mit einem Überschuß an Epichlorhydrin und ausschließender Veresterung mit Methacrylsäure hergestellt. Kristalline VE-Harze erhält man auch bei Veresterung von nicht oder einheitlich ethoxyliertem Bisphenol A mit Methacrylsäure. Kristalline VU-Harze können unter Verwendung von linearen und symmetrischen Diolen und Diisocyanaten hergestellt werden. Besonders geeignet sind hierfür als Diisocyanate MDI, TDI und 1,6-HDI, als Diole geeignet sind 1,2-Ethylenglykol, 1,4-Butandiol, 1,6-Hexandiol und Neopentylglykol. Die Umsetzung des NCO-terminierten Präpolymeren erfolgt bevorzugt mit Hydroxyethylmethacrylat. Die Kristallisation kann durch den Zusatz von Nucleierungsmitteln, wie Kaliumstearat, Talkum oder sehr feinteiliger kristalliner Reaktionsharze beschleunigt werden. Auch Mischungen der kristallinen Reaktionsharze mit bis zu 20 % ihres Gewichts an kristallinen gesättigten Polyestern sind wirksam. Die kristallinen Reaktionsharze sollten einen Schmelzpunkt oberhalb von 50°C aufweisen, damit die Dübelmasse beim Lagern nicht erweicht. Besonders günstig sind Schmelzpunkte zwischen 60 und 120°C.

Bei einer anderen Variante werden die Reaktionsharze eingedickt, zweckmäßigerweise nachdem sie mit den anderen Zusatzstoffen vermischt wurden. Der Eindickprozeß kann bei Raumtemperatur ablaufen oder durch Temperaturerhöhung über etwa 50°C beschleunigt werden. Als eindickfähiges UP-Harz sind prinzipiell alle für SMC oder BMC-Anwendungen geeignete Polyesterharze geeignet. Bevorzugt sind Rezepturen, die einen sehr schnellen Viskositätsanstieg ergeben. Gegebenenfalls kann die Eindickung noch durch Zusatz von Eindickbeschleunigern unterstützt werden. VE- und VU-Harze können nicht nach Standardrezepturen eingedickt werden, da sie keine Carboxylgruppen enthalten. Daher ist es für die Anwendung als Dübelharz notwendig, das Harz zu modifizieren. Dies kann beispielsweise durch Umsetzung mit Maleinsäureanhydrid erfolgen. Auch kann eine Eindickung erreicht werden, wenn Eindickadditive zugesetzt werden. Derartige Eindickadditive sind oben beschrieben.

Ferner kann die Eindickung durch Zusatz von Kieselsäure als feines Pulver in die flüssige Mischung von Harz A und Comonomer B bewirkt werden. Beim Vermischen der Komponenten unter Scherung ist die Masse flüssig, so daß eine gute Homogenisierung erreicht wird. Nach Beendigung der Scherung erstarrt die Masse. Bei kristallinen Reaktionsharzen als Eindickmittel E kann die Verfestigung auf dreierlei Weise erfolgen. Man kann das kristalline Harz als Feststoff in die Lösung von amorphem Harz A und Comonomer B eingeben, erhitzen, wobei sich das kristalline Harz löst, und abkühlen, oder man kann das kristalline Harz als Schmelze in eine heiße Lösung von amorphem Harz A in Comonomer B geben, vermischen und abkühlen. Schließlich kann man auch Schmelzen von kristallinem und amorphem Harz A vermischen, mit Comonomer B versetzen und abkühlen. In allen drei Fällen entstehen bei rascher Abkühlung feine Kristallite, die in der flüssigen Phase dispergiert sind und eine Eindickung bewirken.

Bei einer bevorzugten Methode zur Herstellung der erfindungsgemäßen Dübelmasse werden in flüssiges bzw. verflüssigtes Reaktionsharz A die Zusatzstoffe zugegeben und vermischt. Kristalline Reaktionsharze werden vor oder nach ihrer Zugabe aufgeschmolzen; eindickfähige Reaktionsharze werden flüssig zugegeben. Die Mischung wird dann zu einem Strang geformt, der verfestigt und gegebenenfalls in zylindrische Stücke zerschnitten wird. Die Strangherstellung kann diskontinuierlich durch Einfüllen der Mischung in ein Rohr oder einen Hohlzylinder geschehen; bevorzugt arbeitet man kontinuierlich, indem man das Vermischen in einem Extruder vornimmt. Bei festen, kristallinen Reaktionsharzen müssen diese bei erhöhten Temperaturen aufgeschmolzen werden, bei denen die Gefahr besteht, daß z.B. mikroverkapselte Initiatoren sich vorzeitig zersetzen. Deshalb ist es zweckmäßig, hier den Initiator nicht von Anfang an zuzumischen, sondern beim Ausformen des Strangs einen oder gegebenenfalls mehrere Hohlräume zu bilden, in die nach dem Abkühlen und Verfestigen des Strangs der Initiator eingebracht werden kann. Dies empfiehlt sich auch dann, wenn im Fall von eindickfähigen Reaktionsharzen die Eindickung durch Temperaturerhöhung über etwa 50°C vorgenommen wird. Geeignete Hohlräume sind z.B. koaxiale Aussparungen in Kern oder am Rand des Strangs. Wird die Eindickung bei Temperaturen unterhalb von 50°C, z.B. bei Raumtemperatur durchgeführt, dann können mikroverkapselte Initiatoren gleich von Anfang an zugemischt werden.
In diesem Fall muß darauf geachtet werden, daß die Kapseln nicht durch die Scherkräfte im Extruder vorzeitig zerstört werden. Dies kann z.B. dadurch geschehen, daß man einen Doppelschneckenextruder verwendet. Nach dem Auspressen aus einer Runddüse und gegebenenfalls Abkühlen verfestigt sich die Masse zu einem Strang, der in zylindrische Stücke zerschnitten wird. Bei eingedickten Harzen kann es zweckmäßig sein, hinter dem Extruder ein Rohr vorzusehen, in dem der Eindickprozeß voranschreiten kann. Das Vermischen des Harzes mit den Zusatzstoffen kann auch in Freifallmischern oder Planetenmischern vorgenommen werden.

Bei einer anderen bevorzugten Methode wird die Masse in einer Hohlform verfestigt. Diese hat vorzugsweise die Form des Bohrlochs, in das der Dübel hinterher eingesetzt werden soll. Sie kann auch eine beliebige Form, z.B. Kugelform haben. Bei kristallinen Reaktionsharzen werden diese als Schmelze, zusammen mit den Zusatzstoffen, in eine gekühlte Hohlform, welche an der Innenwand zweckmäßigerweise mit einer Antihaftbeschichtung versehen wurde, eingegossen. Auch hier sollte zweckmäßigerweise wieder der Initiator C nicht von Anfang an zugesetzt, sondern entweder kurz vor der Verfestigung in die Masse oder nach der Verfestigung in eigens dafür vorgesehene Hohlräume eingebracht werden. Gegebenenfalls können in der Hohlform grobe Füllstoffe vorgelegt werden. Nach dem Abkühlen wird die fertige Dübelmasse aus der Form entnommen. Bei einzudickenden Reaktionsharzen wird die Mischung in eine vorzugsweise beheizte Form eingegossen, wo sie aufgrund der erhöhten Temperatur schnell eindickt und sich verfestigt. Man kann auch die Mischung in eine mit entsprechenden Hohlräumen versehene Kunststoff-Form eingießen und ohne Erwärmen durch längeres Stehenlassen eindicken lassen (Blisterverpackung).

Es ist auch möglich, die Mischung von Harz und Zusatzstoffen durch Breitschlitzdüsen auszupressen, die erhaltenen Lagen aufeinanderzulegen und zu zylinderförmigen Stäben zusammenzurollen.

Die Dübelmasse kann verschiedenartig geformt sein. Bevorzugt ist sie zylindrisch und weist einen etwas geringeren Durchmesser als das Bohrloch auf. In diesem Fall wird sie auf den Boden des Bohrlochs eingelegt. Sie kann aber auch als runde oder unregelmäßig geformte Partikel vorliegen, die einen viel geringeren Durchmesser als das Bohrloch haben. In diesem Fall wird die für den Ankerpunkt benötigte Anzahl von Partikeln in das Bohrloch eingefüllt. Auch die Form eines Hohlzylinders mit etwas geringerem Außendurchmesser als der Innendurchmesser des Bohrlochs ist denkbar. Schließlich kann ein zylinderförmiger Dübel auch direkt an das untere Ende einer Ankerstange angegossen sein, oder die Ankerstange kann mit der Dübelmasse beschichtet sein.

Die erfindungsgemäße Dübelmasse dient zur Festlegung von Befestigungselementen in Bohrlöchern von Aufnahmewerkstoffen, wie Bauwerken oder Gesteinswänden. Bevorzugte Befestigungselemente sind maschinell setzbare, rotationssymmetrische Elemente, wie Ankerstangen und Gewindehülsen.

Vorzugsweise wird dabei zuerst die Dübelmasse in das Bohrloch eingeführt, dann wird das Befestigungselement mittels einer Schlag- und/oder Drehbewegung eingebracht. Dadurch wird der Radikalinitiator bzw. Beschleuniger freigesetzt, vermischt sich mit der restlichen Dübelmasse und kann die Polymerisation des Reaktionsharzes auslösen. Die gehärtete Dübelmasse bewirkt den guten Verbund von Befestigungselement und Aufnahmewerkstoff.

Die in den Beispielen genannten Teile und Prozente beziehen sich auf das Gewicht.

### Beispiele

### A. Herstellung der Ausgangsmaterialien

### 1. Kristallines VU-Harz

990 g 4,4'-Diphenylmethandiisocyanat wird auf 70°C aufgeheizt und geschmolzen. In die Lösung werden 0,8 ml Dibutylzinndilaurat als Katalysator und 100 g 1,4-Butandioldimethacrylat als Comonomer gegeben. Bei 70°C werden zunächst 484 g Hydroxyethylmethacrylat (HEMA) zugetropft. Anschließend wird eine Lösung aus 41 g Neopentylglykol und 80 g HEMA zugetropft. Dabei steigt die Innentemperatur auf 82°C an. Es wird 30 Min. bei 80°C nachgerührt. Anschließend werden 404 g Hydroxyethylmethacrylat (HEMA) zugetropft, dabei wird die Innentemperatur auf 100°C erhöht. Der Ansatz wird eine Stunde bei 100°C nachgerührt. Es wird der Rest-NCO-Gehalt bestimmt (< 0,01 %) und anschließend 0,2 g Phenothiazin, 8,4 g tert.-Butylbrenzkatechin als Inhibitoren sowie 57,7 g Diisopropanol-p-toluidin als Beschleuniger zugegeben.
Das Harz besitzt eine Schmelzviskosität (75°C) von ca. 950 mPas und kristallisiert beim Abkühlen zu einer wachsartigen festen Masse mit einem Schmelzbereich zwischen etwa 60° und 80°C.

### 2. Eindickadditiv

100 Teile eines Polyetherpolyols mit der Funktionalität 3 (ARCOL 3450) werden vorgelegt und mit 10,5 Teilen Maleinsäureanhydrid versetzt. Die Mischung wird unter Stickstoff auf 120°C erhitzt und 4 Std. bei dieser Temperatur gehalten. Der entstandene Halbester besitzt eine Säurezahl von 52.

### 3. VU-Harz

575 g des Isomerengemisches von Diphenylmethandiisocyanat wird bei 25°C vorgelegt. Nach Zugabe von 0,3 ml Dibutylzinndilaurat werden 70,1 g Dipropylenglykol zugetropft. Unter leichter Begleitheizung steigt die Innentemperatur bei der Zugabe auf 55°C an. Anschließend wird 30 min. bei 55°C nachgerührt. Danach werden 792 g Hydroxypropylmethacrylat (HPMA) zugetropft. Dabei steigt die Innentemperatur unter leichter Begleitheizung auf 95°C an. Der Ansatz wird zwei Stunden bei 95°C nachgerührt (Rest-NCO-Gehalt < 0,01 %). Dann werden 767 g 1,4-Butandioldimethacrylat als Comonomer sowie 256 g Eindickadditiv (A2) zugegeben. Anschließend werden 0,25 g Phenothiazin, 10,2 g tert.-Butylbrenzkatechin und 70 g Diisopropanol-p-toluidin als Beschleuniger zudosiert.

### 4. VE-Harz

Zu 300 g des Bisphenol A-diglycidylethers (Epikote 828, Fa. Shell) werden 0,36 g Dimethylbenzylamin gegeben. Anschließend werden bei 85°C 137 g Methacrylsäure so zugetropft, daß die Innentemperatur auf 110°C ansteigt. Der Ansatz wird unter Luft gerührt. Nachdem die Säurezahl den Wert 10 unterschritten hat, wird das Harz mit 291 g 1,4-Butandioldimethacrylat und 81 g Eindickadditiv (A2) versetzt. Anschließend werden 0,0 g Phenothiazin, 3,2 g tert.-Butylbrenzkatechin sowie 22,2 g Diisopropanol-p-toluidin zudosiert und die Formulierung homogenisiert.

### 5. VE-Harz monomerfrei

900 g des Umsetzungsproduktes von ethoxyliertem Bisphenol A mit 2 Mol Methacrylsäure werden auf 60°C erwärmt und mit 100 g Eindickadditiv (A2) versetzt. Anschließend werden 0,1 g Phenothiazin, 4,0 g tert.-Butylbrenzkatechin sowie 27 g Diisopropanol-p-toluidin zugegeben und die Formulierung homogenisiert.

### B. Herstellung der Dübelmassen

1. 200 g des VU-Harzes A1 wurden bei 90°C aufgeschmolzen und mit 800 g Füllstoff Quarz (mittlere Korngröße 1 mm) versetzt und innig geknetet. In ein 20 cm langes Teflonrohr mit einem Innendurchmesser von 13 mm, in dem sich im Kernbereich ein 3 mm dicker Stift befindet, wird die Masse eingefüllt. Nach dem Abkühlen und Verfestigen wird der Stift herausgezogen und in den entstehenden koaxialen Hohlraum wird eine stangenförmige Preßmasse aus 20 % Benzoylperoxid und 80 % Gipspulver (als Phlegmatisierungsmittel) eingeschoben. Es wird eine selbsttragende Dübelmasse erhalten, die in zwei gleich lange Stücke zerschnitten wird.

2. 100 Teile VU-Harz A3 werden mit 1,8 Teilen Magnesiumoxid vermischt. Anschließend werden 400 Teile Füllstoff Quarz zugegeben und die Masse wird innig verknetet. Die Masse wird in ein Teflonrohr, wie unter B1 beschrieben, eingeführt und bei 70°C innerhalb 3 Stunden eingedickt. Nach dem Entformen wird die entstandene Dübelmasse in 2 Stücke zerschnitten, und in den koaxialen Hohlraum wird der phlegmatisierte und verkapselte Initiator eingeführt.

3. Es wurde wie unter B2 beschrieben gearbeitet, wobei aber das Harz A5 verwendet wurde.

4. 100 Teile Harz A4 wurden mit 1,8 Teilen Magnesiumoxid, 400 Teilen Quarz und 12 Teilen in Cellulose mikroverkapselten (Durchmesser 0,1 mm) Benzoylperoxid (50 %ig in Diethylphthalat) bei Raumtemperatur vermischt. Die Masse wurde in eine Blisterverpackung mit Hohlformen (Durchmesser 13 mm, Länge 90 mm) eingefüllt und verschlossen. Nach einer Woche war die Masse verfestigt und die Dübel konnten entnommen werden.

### C. Anwendung der Dübelmassen

Die selbsttragenden Dübelmassen nach B1 bis B4 wurden in 110 mm tiefe Bohrlöcher (Durchmesser 14,3 mm) in einer Betonwand eingesetzt. In die Masse wurden Ankerstangen (Gewinde M12, Länge 150 mm) mittels eines Bohrhammers eingetrieben. Nach 60 min bei 23°C waren die Massen ausgehärtet. Die Lastwerte wurden in Ausziehversuchen ermittelt. Hierfür wurde unter Verwendung einer Abstützung (Durchmesser 40 mm) der Anker ausgezogen. Dabei wurde jeweils Stahlversagen (Bruch der Ankerstange) beobachtet. Die ermittelten Lastwerte liegen mit einer geringen Streuung um 50 kN.

## Patentansprüche

1. Dübelmasse für die chemische Befestigungstechnik, enthaltend
A. ein radikalisch polymerisierbares Reaktionsharz,
B. gegebenenfalls ein Comonomer in einer Menge von bis zu 200 Gew.-%, bezogen auf A,
C. einen Radikalinitiator in einer Menge von 0,5 bis 15 Gew.-%, bezogen auf A,
D. einen Polymerisationsbeschleuniger in einer Menge von 0,1 bis 4 Gew.-%, bezogen auf A,
E. ein Eindickmittel für das Reaktionsharz in einer Menge von 0,1 bis 10 Gew.-% bei solcher Verwendung von Oxiden oder Hydroxiden des Magnesiums, Calciums, Lithiums oder Aluminiums oder von Kieselsäuren oder Bentone, bzw. von 10 bis 100 Gew.-% bei solcher Verwendung von kristallinen Reaktionsharzen mit einem Schmelzpunkt oberhalb von 50°C, jeweils bezogen auf A,
F. grobe oder feinteilige Füllstoffe in einer Menge von bis zu 1000 Gew.-%, bezogen auf A,
dadurch gekennzeichnet, daß die Dübelmasse als selbsttragende und lagerstabile Masse vorliegt, die in dieser Form direkt in ein Bohrloch eingesetzt werden kann, und daß der Radikalinitiator C oder der Beschleuniger D in der Matrix der anderen Bestandteile, als separate Phase von dieser räumlich abgetrennt, eingelagert ist.

2. Dübelmasse nach Anspruch 1, dadurch gekennzeichnet, daß sie feste, formstabile Konsistenz hat und eine trockene Oberfläche aufweist.

3. Dübelmasse nach Anspruch 1, dadurch gekennzeichnet, daß das Reaktionsharz A ein kristalliner ungesättigter Polyester, ein kristallines Vinylester- oder Vinylesterurethanharz oder eine Mischung davon ist.

4. Dübelmasse nach Anspruch 1, dadurch gekennzeichnet, daß das Reaktionsharz A durch ein Eindickmittel E eingedickt wurde.

5. Dübelmasse nach Anspruch 1, dadurch gekennzeichnet, daß das Comonomer B ein hochsiedender Methacrylsäureester, vorzugsweise Butandioldimethacrylat, ist.

6. Dübelmasse nach Anspruch 1, dadurch gekennzeichnet, daß das Comonomer B Styrol oder tert.-Butylstyrol, gegebenenfalls zusammen mit einem hochsiedenden Methacrylsäureester, ist.

7. Verfahren zur Herstellung der Dübelmasse nach Anspruch 1, dadurch gekennzeichnet, daß man flüssiges Reaktionsharz A und die Zusatzstoffe vermischt, die Mischung zu einem Strang formt, den Strang verfestigt und diesen gegebenenfalls in zylindrische Stücke zerschneidet.

8. Verfahren zur Herstellung der Dübelmasse nach den Ansprüchen 7 und 3, dadurch gekennzeichnet, daß man das Reaktionsharz A aufschmilzt und mit den Zusatzstoffen B, D und F vermischt, die Mischung zu einem Strang mit einem oder mehreren Hohlräumen formt, den Strang abkühlt und in die Hohlräume den Initiator C einbringt.

9. Verfahren zur Herstellung der Dübelmasse nach den Ansprüchen 7 und 4, dadurch gekennzeichnet, daß man alle Komponenten miteinander mischt, die Mischung in Strangform überführt und bei Temperaturen unterhalb von 50°C eindicken läßt.

10. Verfahren zur Herstellung der Dübelmasse nach den Ansprüchen 7 und 4, dadurch gekennzeichnet, daß man alle Komponenten bis auf den Initiator C vermischt, die Mischung in Strangform mit einem oder mehreren Hohlräumen überführt, bei Temperaturen oberhalb von etwa 50°C eindickt, den Strang abkühlt und in die Hohlräume den Initiator C einbringt.

11. Verfahren zur Herstellung der Dübelmasse nach Anspruch 1, dadurch gekennzeichnet, daß man in einer Hohlform gegebenenfalls grobe Füllstoffe F vorlegt, flüssiges Reaktionsharz A zusammen mit den Zusatzstoffen in die Hohlform einbringt, verfestigt und die Dübelmasse entformt.

12. Verfahren zur Herstellung der Dübelmasse nach den Ansprüchen 11 und 3, dadurch gekennzeichnet, daß man das Reaktionsharz A aufschmilzt, zusammen mit den Zusatzstoffen in die Hohlform einbringt, die Mischung durch Abkühlen verfestigt, gegebenenfalls den Initiator C in einen Hohlraum einbringt und die Dübelmasse entformt.

13. Verfahren zur Herstellung der Dübelmasse nach den Ansprüchen 11 und 4, dadurch gekennzeichnet, daß man das Reaktionsharz A zusammen mit den Zusatzstoffen in eine vorzugsweise beheizte Hohlform einbringt, dort eindickt und dadurch verfestigt und die Dübelmasse entformt.

14. Verwendung der Dübelmasse nach Anspruch 1 zur Festlegung von Befestigungselementen in Bohrlöchern von soliden Aufnahmewerkstoffen, dadurch gekennzeichnet, daß durch Eintreiben des Befestigungselements in die Dübelmasse mittels Schlag- und/ oder Drehbewegung der Radikalinitiator C bzw. der Beschleuniger D freigesetzt wird und sich mit der restlichen Dübelmasse vermischt, wodurch die Polymerisation des Reaktionsharzes A ausgelöst wird.

15. Verwendung der Dübelmasse nach Anspruch 14 zur Festlegung von Befestigungselementen in Bohrlöchern von soliden Aufnahmewerkstoffen, dadurch gekennzeichnet, daß vor dem Eintreiben des Befestigungselementes die Dübelmasse dem Bohrloch zugeführt wurde.

16. Verwendung der Dübelmasse nach Anspruch 14 zur Festlegung von Befestigungselementen in Bohrlöchern von soliden Aufnahmewerkstoffen, dadurch gekennzeichnet, daß zusammen mit dem Eintreiben des Befestigungselementes die Dübelmasse dem Bohrloch zugeführt wird.

17. Verwendung der Dübelmasse nach Anspruch 16 zur Festlegung von Befestigungselementen in Bohrlöchern von soliden Aufnahmewerkstoffen, dadurch gekennzeichnet, daß die Dübelmasse mit dem Befestigungselement in Verbindung steht.

## Claims

1. A plugging compound for chemical fastening technology comprising
A. a free-radically polymerizable reactive resin,
B. optionally a comonomer in an amount of up to 200 wt.%, relative to A,
C. a free-radical initiator in an amount of from 0,5 to 15 wt.%, relative to A,
D. a polymerization accelerant in an amout of from 0,1 to 4 wt.%, relative to A,
E. a thickener for the resin in an amount of from 0,1 to 10 wt.% in case of using oxides or hydroxides of magnesium, calcium, lithium or aluminium, or of silicic acids or bentones respectively of from 10 to 100 wt.% in case of using crystalline reactive resins having a melting point higher than 50°C are being used, the wt.% being ralative to A,
F. coarse or finely divided fillers in an amount of up to 1000 wt.%, relative to A,
characterized in that the plugging compound is a self-supporting and storage-stable material which can be introduced in that form directly into a drill-hole and that said free-radical initiator C or said accelerant D is embedded in the matrix of the other ingredients as a separate phase spatially separated from said matrix.

2. A plugging compound as claimed in claim 1, characterized in that it has a firm, form-stable consistency and a dry surface.

3. A plugging compound as claimed in claim 1, characterized in that said reactive resin A is a crystalline unsaturated polyester, a crystalline vinyl ester resin or vinyl ester urethane resin or a mixture thereof.

4. A plugging compound as claimed in claim 1, characterized in that said reactive resin A is thickened by a thickener E.

5. A plugging compound as claimed in claim 1, characterized in that said comonomer B is a high boiling methacrylic ester, preferably butanediol dimethacrylate.

6. A plugging compound as claimed in claim 1, characterized in that said comonomer B is styrene or tert-butylstyrene, optionally together with a high boiling methacrylic ester.

7. A process for preparing the plugging compound of claim 1, characterized in that liquid reactive resin A and the additives are mixed together, the mixture is formed into a strand, said strand is consolidated, and optionally cut into cylindrical pieces.

8. A process for preparing the plugging compound as claimed in claims 7 and 3, characterized in that the reactive resin A is melted and mixed with the additives B, D and F, the mixture is formed into a strand having one or more cavities, the strand is cooled, and the initiator C is introduced into the cavities.

9. A process for preparing the plugging compound as claimed in claims 7 and 4, characterized in that all components are mixed together, the mixture is converted into strand form and allowed to thicken at temperatures below 50°C.

10. A process for preparing the plugging compound as claimed in claims 7 and 4, characterized in that all components except for initiator C are mixed together, the mixture is converted into strand form with one or more cavities, thickened at temperatures above about 50°C, the strand is cooled and the initiator C is introduced into the cavities.

11. A process for preparing the plugging compound of claim 1, characterized in that optionally initially coarse fillers F are charged into a hollow mold, liquid reactive resin A is added together with the additives, and consolidated, and that the plugging compound is demolded.

12. A process for preparing the plugging compound as claimed in claims 11 and 3, characterized in that the reactive resin A is melted, introduced into the hollow mold together with the additives, the mixture is consolidated by cooling, the initiator C is optionally introduced into a cavity, and the plugging compound is demolded.

13. A process for preparing the plugging compound as claimed in claims 11 and 4, characterized in that the reactive resin A is introduced together with the additives into a preferably heated hollow mold, thickened therein and thereby consolidated, and the plugging compound is demolded.

14. The use of the plugging compound of claim 1 for fixing fastening elements in drill-holes in massive materials, characterized in that the fastening elements are driven into the plugging compound by means of a percussive and/or rotary movement to liberate the free radical initiator C and/or the accelerant D, whereby it becomes mixed with the rest of the plugging compound to initiate the polymerization of reactive resin A.

15. A use of the plugging compound as claimed in claim 14 for fixing fastening elements in drill-holes in massive materials, characterized in that the driving in of the fastening element is preceded by introducing the plugging compound into the drill-hole.

16. A use of the plugging compound as claimed in claim 14 for fixing fastening elements in drill-holes in massive materials, characterized in that the driving in of the fastening element is accompanied by introduction of the plugging compound into the drill-hole.

17. A use of the plugging compound as claimed in claim 16 for fixing fastening elements in drill-holes in massive materials, characterized in that the plugging compound communicates with the fastening element.

## Revendications

1. Mastic pour chevilles pour la technique de fixation chimique contenant :
A. une résine composite polymérisable par voie radicalaire,
B. éventuellement un comonomère en une quantité allant jusqu'à 200% en poids, par rapport à A,
C. un initiateur radicalaire en une quantité comprise entre 0,5 et 15% en poids, par rapport à A,
D. un accélérateur de polymérisation en une quantité comprise entre 0,1 et 4% en poids, par rapport à A,
E. un agent épaississant pour la résine composite en une quantité comprise entre 0,1 et 10% en poids en cas d'utilisation d'oxydes ou d'hydroxydes de magnésium, de calcium, de lithium ou d'aluminium ou d'acides siliciques ou de bentonite, ou entre 10 et 100% en poids en cas d'utili-sation de résines composites cristallines avec un point de fusion au-dessus de 50°C, respectivement par rapport à A,
F. des charges grossières ou finement dispersées en une quantité allant jusqu'à 100% en poids, par rapport à A,
caractérisé en ce que, le mastic pour chevilles se présente sous la forme d'une matière sans support et stable en stockage, qui peut être introduite directement dans une trou de perçage sous cette forme, et en ce que l'initiateur radicalaire C ou l'accélérateur D est introduit dans la matrice des autres composants comme phase distincte séparée spatialement de celle-ci.

2. Mastic pour chevilles selon la revendication 1, caractérisé en ce qu'il a une consistance solide, de forme stable, et présente une surface sèche.

3. Mastic pour chevilles selon la revendication 1, caractérisé en ce que la résine composite A est un polyester cristallin insaturé, une résine d'ester de vinyle ou d'ester de vinyle uréthane cristalline ou un mélange de celles-ci.

4. Mastic pour chevilles selon la revendication 1, caractérisé en ce que la résine composite A a été épaissie par un agent épaississant E.

5. Mastic pour chevilles selon la revendication 1, caractérisé en ce que le comonomère B est un ester d'acide méthacrylique à point d'ébullition élevé, de préférence le diméthacrylate de butanediol.

6. Mastic pour chevilles selon la revendication 1, caractérisé en ce que le comonomère B est le styrène ou le tert.-butylstyrène, éventuellement avec un ester d'acide méthacrylique à point d'ébullition élevé.

7. Procédé pour la préparation de mastic pour chevilles selon la revendication 1, caractérisé en ce que, l'on mélange une résine composite liquide A et les additifs, on moule le mélange en forme de corde, on durcit la corde et on la découpe éventuellement en morceaux cylindriques.

8. Procédé pour la préparation du mastic pour chevilles selon les revendica-tions 7 et 3, caractérisé en ce que, l'on fait fondre la résine composite A et on la mélange avec les additifs B, D et F, on moule le mélange en forme de corde avec un ou plusieurs espaces creux, on refroidit la corde et on introduit l'initiateur C dans les espaces creux.

9. Procédé pour la préparation du mastic pour chevilles selon les revendica-tions 7 et 4, caractérisé en ce que l'on mélange tous les composants les uns avec les autres, on transforme le mélange en forme de corde, et en ce qu'on laisse épaissir à des températures inférieures à 50°C.

10. Procédé pour la préparation du mastic pour chevilles selon les revendica-tions 7 et 4, caractérisé en ce que l'on mélange tous les composants jusqu'à l'initiateur C, on transforme le mélange en forme de corde avec un ou plusieurs espaces creux, on épaissit à des températures supérieures à environ 50°C, on refroidit la corde et on introduit l'initiateur C dans les espaces creux.

11. Procédé pour la préparation du mastic pour chevilles selon la revendication 1, caractérisé en ce qu'on place dans un moule creux éventuellement des charges F grossières, on introduit une résine composite A en même temps que les additifs dans le moule creux, on durcit et on démoule le mastic pour chevilles.

12. Procédé pour la préparation du mastic pour chevilles selon les revendica-tions 11 et 3, caractérisé en ce qu'on fait fondre la résine composite A, on l'introduit en même temps que les additifs dans le moule creux, on durcit le mélange par refroidissement, on introduit éventuellement l'initiateur C dans un espace creux et on démoule le mastic pour chevilles.

13. Procédé pour la préparation du mastic pour chevilles selon les revendica-tions 11 et 4, caractérisé en ce qu'on introduit la résine composite A en même temps que les additifs dans un moule creux de préférence chauffé, on l'y laisse s'épaissir et durcir et on démoule le mastic pour chevilles.

14. Utilisation du mastic pour chevilles selon la revendication 1 pour le scelle-ment d'éléments de fixation dans des trous de perçage de matériaux solides de réception, caractérisée en ce que par enfoncement de l'élément de fixation dans le mastic pour chevilles au moyen d'un mouvement de perforation et/ou de rotation, l'initiateur radicalaire C ou l'accélérateur D est libéré et se mélange avec le reste du mastic pour chevilles, ce par quoi la polymérisation est amorcée.

15. Utilisation du mastic pour chevilles selon la revendication 14 pour le scellement d'éléments de fixation dans des trous de perçage de matériaux solides de réception, caractérisée en ce que, le mastic pour chevilles a été introduit dans le trou de perçage avant l'enfoncement de l'élément de fixation.

16. Utilisation du mastic pour chevilles selon la revendication 14 pour le scellement d'éléments de fixation dans des trous de perçage de matériaux solides de réception, caractérisée en ce que, le mastic pour chevilles est introduit dans le trou de perçage en même temps que l'enfoncement de l'élément de fixation.

17. Utilisation du mastic pour chevilles selon la revendication 16 pour le scellement d'éléments de fixation dans des trous de perçage de matériaux solides de réception, caractérisée en ce que, le mastic pour chevilles est lié à l'élément de fixation.
